# DEMANDE DE BREVET EUROPEEN

(11) **EP 4 851 048 A1**
(43) Date de publication de la demande: **09.12.2026**
(21) Numéro de dépôt: 26182268.8
(22) Date de dépôt: 01.06.2026
(51) Int. Cl.: B64D 27/40

(54) **ASSEMBLAGE D'UN MOTEUR ET D'UN MÂT POUR AÉRONEF**

(30) Priorité: 06.06.2025 FR 2506166
(71) Demandeur: Airbus Operations S.A.S., 31060 Toulouse (FR)
(72) Inventeur: BERJOT, Michael, 31060 Toulouse (FR); LANSIAUX, Rémi, 31060 Toulouse (FR); SENTIER, Julien, 31060 Toulouse (FR); VIGNES, Jean-Baptiste, 31060 Toulouse (FR)
(74) Mandataire: Cabinet Le Guen Maillet

(57) **Abrégé**

L'invention concerne un assemblage (100) comportant un moteur, un mât, une poutre (102) solidaire du mât (18), une ferrure (104) solidaire du moteur (16), et deux manilles latérales (106a-b) où chacune présentent une première extrémité montée articulée sur la poutre (102) au niveau d'une première articulation (108a-b) et une deuxième extrémité montée articulée sur la ferrure (104) au niveau d'une deuxième articulation (108c-d), et où les deux deuxièmes articulations (108c-d) sont montées de manière coaxiale par rapport à un même axe d'articulation (110) et où chaque manille latérale (106a-b) est doublée par une manille latérale complémentaire (116a-b), où les manilles latérales (106a-b) et les manilles latérales complémentaires (116a-b) forment une chape femelle (120) dans laquelle une chape mâle (122) de la poutre (102) et une chape mâle (124) de la ferrure (104) sont insérées.
Un tel arrangement facilite le montage grâce à la présence des deux manilles deux points.

## Description

### DOMAINE TECHNIQUE

La présente invention concerne un assemblage pour un aéronef, ainsi qu'un aéronef comportant au moins un tel assemblage avec des manilles croisées.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât qui est fixé à la structure de l'aile et qui s'étend en-dessous de l'aile et le moteur est suspendu sous le mât.

Le moteur est fixé au mât par l'intermédiaire d'un système d'attache moteur comprenant une attache moteur avant et une attache moteur arrière.

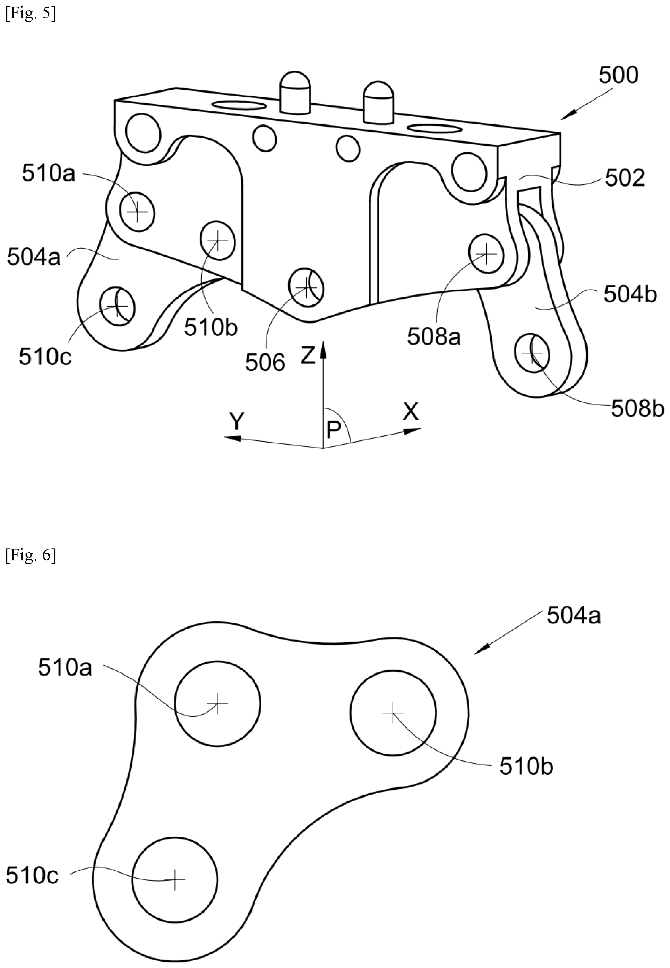

Un exemple d'une attache moteur arrière est représenté en perspective à la Fig. 5 et la Fig. 6 montre une manille trois points mise en place dans l'attache moteur arrière de l'état de la technique. L'attache moteur arrière 500 comporte par exemple une poutre 502 fixée à une surface inférieure du mât et ici deux manilles 504a-b fixées entre la poutre 502 et un carter arrière du moteur par des liaisons pivot ou rotule.

Il y a ainsi une manille tribord 504b et une manille bâbord 504a. Les deux manilles 504a-b sont inscrites dans un plan perpendiculaire à un axe longitudinal X du moteur.

La manille tribord 504b est une manille deux points, c'est-à-dire qu'elle est fixée à la poutre 502 par un premier point de fixation 508a et au carter arrière du moteur par un deuxième point de fixation 508b.

La manille bâbord 504a est une manille trois points, c'est-à-dire qu'elle est fixée à la poutre 502 par un premier 510a et un deuxième 510b points de fixation et au carter arrière du moteur par un troisième point de fixation 510c.

La poutre 502 comporte également un point de fixation complémentaire 506 qui est prévu pour assurer la fixation au carter arrière du moteur soit directement, soit par l'intermédiaire d'une bielle complémentaire à deux points.

Le document EP-A-3 750 811 divulgue un assemblage de l'état de la technique.

Même si un tel arrangement est performant, le montage d'une manille trois points peut être délicat et il est souhaitable de trouver un arrangement différent qui facilite entre autres le montage des bielles.

### EXPOSÉ DE L'INVENTION

Un objet de la présente invention est de proposer un assemblage qui présente au moins deux manilles qui se croisent.

À cet effet, est proposé un assemblage pour un aéronef, ledit assemblage présentant un plan médian vertical et comportant :
- un mât,
- un moteur,
- une poutre solidaire du mât,
- une ferrure solidaire du moteur, et
- deux manilles latérales disposées d'un même côté du plan médian vertical,

où chaque manille latérale présente une première extrémité montée articulée sur la poutre au niveau d'une première articulation et une deuxième extrémité montée articulée sur la ferrure au niveau d'une deuxième articulation, et où les deux deuxièmes articulations sont montées de manière coaxiale par rapport à un même axe d'articulation, et où chaque manille latérale est doublée par une manille latérale complémentaire,
ledit assemblage étant caractérisé en ce que les manilles latérales et les manilles latérales complémentaires forment une chape femelle dans laquelle une chape mâle de la poutre et une chape mâle de la ferrure sont insérées.

Un tel arrangement permet de remplacer la manille trois points par deux manilles deux points plus faciles à mettre en place.

Avantageusement, les deux premières articulations sont montées à des endroits distincts sur des axes d'articulation différents et parallèles.

Avantageusement, chaque articulation prend la forme d'une liaison rotule dont l'axe principal de rotation est parallèle à l'axe d'articulation.

Avantageusement, l'assemblage comporte une manille latérale supplémentaire disposée de l'autre côté du plan médian vertical par rapport aux manilles latérales où la manille latérale supplémentaire présente une première extrémité montée articulée sur la poutre au niveau d'une première articulation supplémentaire et une deuxième extrémité montée articulée sur la ferrure au niveau d'une deuxième articulation supplémentaire.

Avantageusement, l'assemblage comporte un point central d'articulation qui est au niveau du plan médian vertical et au niveau duquel la poutre et la ferrure sont montées articulées l'une par rapport à l'autre.

L'invention propose également un aéronef comportant un assemblage selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue de derrière d'un assemblage selon l'invention,
Fig. 3 est une vue de derrière et en perspective d'une partie bâbord de l'assemblage de la Fig. 2,
Fig. 4 est la même vue que celle de la Fig. 3 avec une coupe au niveau de points d'articulation,
Fig. 5 est une vue de derrière et en perspective d'un système d'attache moteur arrière de l'état de la technique, et
Fig. 6 est une vue d'une manille trois points de l'état de la technique.

### EXPOSÉ DÉTAILLÉ DE MODES DE RÉALISATION

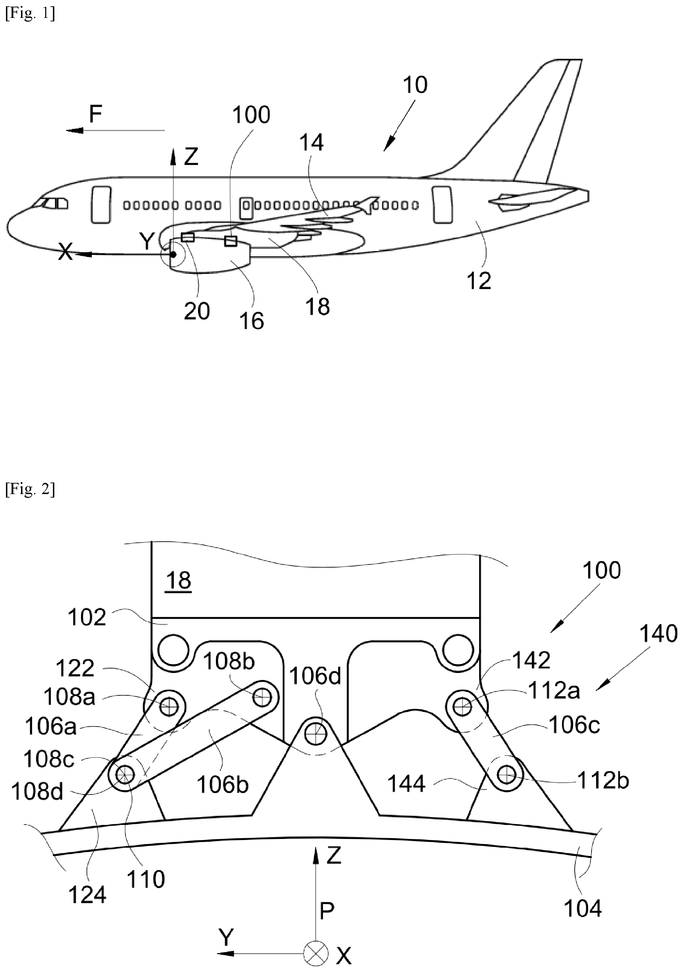

Dans la description qui suit, les termes relatifs à une position sont pris en référence à un aéronef en position d'avancement, c'est-à-dire comme il est représenté sur la Fig. 1.

La Fig. 1 montre un aéronef 10 qui présente un fuselage 12 de chaque côté duquel est fixée une aile 14. Chaque aile 14 supporte au moins un moteur 16 qui est fixé à l'aile 14 par l'intermédiaire d'un mât 18. Le moteur 16 est ici un turboréacteur, mais il peut prendre également la forme d'un turbopropulseur.

Dans la description qui suit, et par convention, on appelle X l'axe longitudinal du moteur 16 orienté positivement dans le sens d'avancement de l'aéronef 10, on appelle Y, l'axe transversal du moteur 16 qui est horizontal lorsque l'aéronef est au sol, et Z, l'axe vertical ou hauteur verticale lorsque l'aéronef est au sol, ces trois axes X, Y et Z étant orthogonaux entre eux. Les positions avant et arrière sont prises en relation avec l'avant et l'arrière de l'aéronef 10. Le sens d'avancement de l'aéronef 10 est donné par la flèche F qui montre la direction dans laquelle l'aéronef 10 avance lorsque les moteurs 16 fonctionnent. Le moteur 16 présente également un plan médian vertical P (XZ).

Entre le mât 18 et le moteur 16, l'aéronef 10 présente un système d'attache moteur qui comporte un système d'attache moteur avant 20 et un système d'attache moteur arrière.

Le système d'attache moteur arrière, le mât 18 et le moteur 16 forment ensemble un assemblage 100 selon l'invention. Chaque système d'attache moteur 20 assure la fixation entre le mât 18 et le moteur 16.

Les Figs. 2 à 4 montrent l'assemblage 100 selon l'invention.

L'assemblage 100 est agencé dans le repère XYZ du moteur 16 et il partage avec le moteur 16 le plan médian vertical P.

L'assemblage 100 comporte également une poutre 102 qui est solidaire du mât 18 et une ferrure 104 qui est solidaire du moteur 16. La poutre 102 et la ferrure 104 peuvent être une partie rapportée et fixée sur le mât 18 ou respectivement le moteur 16, ou une partie intégrante du mât 18 ou respectivement du moteur 16.

Dans le mode de réalisation de l'invention représenté ici, la ferrure 104 est une couronne ou une portion de couronne fixée ou intégrée au moteur 16.

L'assemblage 100 comporte également deux manilles latérales 106a-b qui sont disposées d'un même côté du plan médian vertical P, ici à bâbord.

Chaque manille latérale 106a-b présente une première extrémité montée articulée sur la poutre 102 au niveau d'une première articulation 108a-b et une deuxième extrémité montée articulée sur la ferrure 104 au niveau d'une deuxième articulation 108c-d.

Les deux deuxièmes articulations 108c-d sont montées de manière coaxiale par rapport à un même axe d'articulation 110, c'est-à-dire que les deuxièmes extrémités des deux manilles latérales 106a-b sont montées sur le même axe d'articulation 110.

Les deux premières articulations 108a-b sont montées à des endroits distincts et donc sur des axes d'articulation différents mais parallèles et en particulier parallèles à l'axe longitudinal X. L'axe d'articulation 110 est parallèle à l'axe longitudinal X.

Les deux manilles latérales 106a-b sont à deux points mais avec un point commun d'articulation 108c-d et elles remplacent la manille trois points de l'état de la technique. Pour des raisons de redondance, chaque manille latérale 106a-b est doublée par une manille latérale complémentaire 116a-b. Chaque manille latérale 106a-b présente ainsi une manille latérale complémentaire 116a-b qui est sa symétrique par rapport à un plan perpendiculaire à l'axe longitudinal X et les articulations 108a-d sont communes aux manilles latérales 106a-b et aux manilles latérales complémentaires 116a-b.

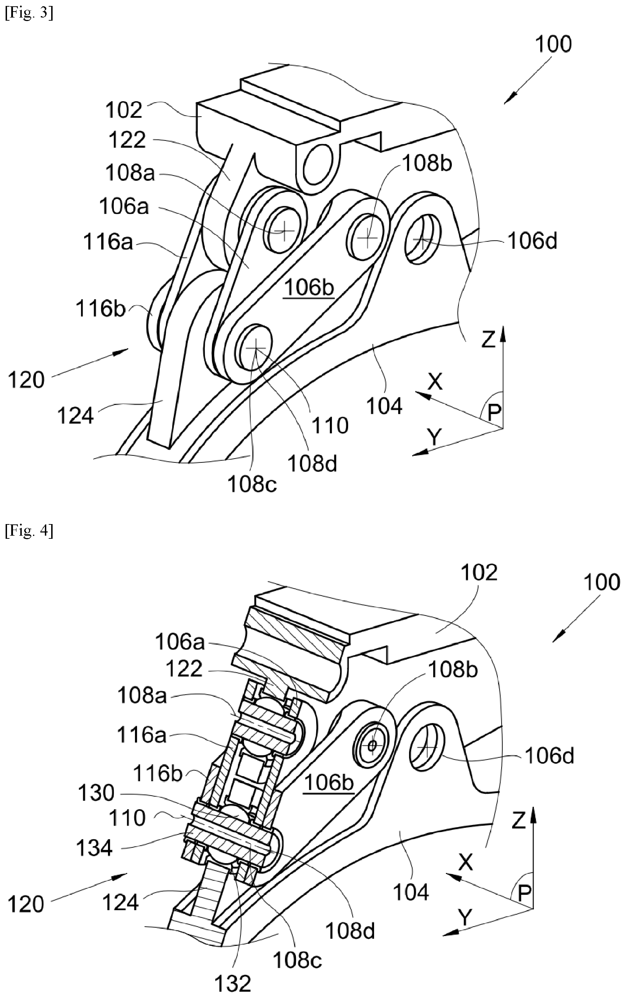

Dans l'arrangement particulier représenté sur les Figs. 3 et 4, les manilles latérales 106a-b et les manilles latérales complémentaires 116a-b forment ensemble une chape femelle 120, c'est-à-dire les manilles latérales 106a-b forment une paroi de la chape femelle 120 et les manilles latérales complémentaires 116a-b forment l'autre paroi de la chape femelle 120.

La poutre 102 et la ferrure 104 présentent alors chacune une chape mâle 122, 124 et ces chapes mâles 122 et 124 sont insérées dans la chape femelle 120 entre lesdites parois la constituant.

Chaque articulation 108a-d peut être une liaison pivot dont l'axe est parallèle à l'axe d'articulation 110 (confondu avec l'axe d'articulation 110 pour les deuxièmes articulations 108c-d) mais préférentiellement, elle prend la forme d'une liaison rotule dont l'axe principal de rotation est parallèle à l'axe d'articulation 110 et donc à l'axe longitudinal X. Chaque rotule est réalisée ici par la mise en place d'une noix sphérique 130 montée libre dans une cage 132 fixée à la chape mâle 122, 124 considérée et d'un axe 134 traversant la noix sphérique 130 et solidaire des manilles 106a-b, 116a-b considérées.

Pour assurer la fixation complète du moteur 16 au mât 18, l'assemblage 100 comporte ici une manille latérale supplémentaire 106c. Cette manille latérale supplémentaire 106c est disposée de l'autre côté du plan médian vertical P par rapport aux manilles latérales 106a-b et la manille latérale supplémentaire 106c présente une première extrémité montée articulée sur la poutre 102 au niveau d'une première articulation supplémentaire 112a et une deuxième extrémité montée articulée sur la ferrure 104 au niveau d'une deuxième articulation supplémentaire 112b.

Également pour des raisons de redondance, la manille latérale supplémentaire 106c est doublée et les deux manilles latérales supplémentaires 106c forment une chape femelle 140 dans laquelle une chape mâle 142 de la poutre 102 et une chape mâle 144 de la ferrure 104 sont insérées.

Comme précédemment, chaque articulation supplémentaire 112a-b peut être une liaison pivot dont l'axe est parallèle à l'axe d'articulation 110 mais préférentiellement, elle prend la forme d'une liaison rotule dont l'axe principal de rotation est parallèle à l'axe d'articulation 110 et donc à l'axe longitudinal X.

Dans le mode de réalisation de l'invention représenté sur les Figs. 2 à 4, l'assemblage 100 comporte un point central d'articulation 106d qui est au niveau du plan médian vertical P et au niveau duquel la poutre 102 et la ferrure 104 sont montées articulées l'une par rapport à l'autre ici directement par mise en place d'un axe enchâssé dans des alésages de la poutre 102 et de la ferrure 104 prévus à cet effet. Dans un autre mode de réalisation, il est possible de mettre une bielle entre la poutre 102 et la ferrure 104.

## Revendications

1. Assemblage (100) pour un aéronef (10), ledit assemblage (100) présentant un plan médian vertical (P) et comportant :
- un mât (18),
- un moteur (16),
- une poutre (102) solidaire du mât (18),
- une ferrure (104) solidaire du moteur (16), et
- deux manilles latérales (106a-b) disposées d'un même côté du plan médian vertical (P),
où chaque manille latérale (106a-b) présente une première extrémité montée articulée sur la poutre (102) au niveau d'une première articulation (108a-b) et une deuxième extrémité montée articulée sur la ferrure (104) au niveau d'une deuxième articulation (108c-d), et où les deux deuxièmes articulations (108c-d) sont montées de manière coaxiale par rapport à un même axe d'articulation (110), et où chaque manille latérale (106a-b) est doublée par une manille latérale complémentaire (116a-b),
ledit assemblage (100) étant **caractérisé en ce que** les manilles latérales (106a-b) et les manilles latérales complémentaires (116a-b) forment une chape femelle (120) dans laquelle une chape mâle (122) de la poutre (102) et une chape mâle (124) de la ferrure (104) sont insérées.

2. Assemblage (100) selon la revendication 1, **caractérisé en ce que** les deux premières articulations (108a-b) sont montées à des endroits distincts sur des axes d'articulation différents et parallèles.

3. Assemblage (100) selon l'une des revendications 1 ou 2, **caractérisé en ce que** chaque articulation (108a-d) prend la forme d'une liaison rotule dont l'axe principal de rotation est parallèle à l'axe d'articulation (110).

4. Assemblage (100) selon l'une des revendications 1 à 3, **caractérisé en ce qu'**il comporte une manille latérale supplémentaire (106c) disposée de l'autre côté du plan médian vertical (P) par rapport aux manilles latérales (106a-b) où la manille latérale supplémentaire (106c) présente une première extrémité montée articulée sur la poutre (102) au niveau d'une première articulation supplémentaire (112a) et une deuxième extrémité montée articulée sur la ferrure (104) au niveau d'une deuxième articulation supplémentaire (112b).

5. Assemblage (100) selon la revendication 4, **caractérisé en ce qu'**il comporte un point central d'articulation (106d) qui est au niveau du plan médian vertical (P) et au niveau duquel la poutre (102) et la ferrure (104) sont montées articulées l'une par rapport à l'autre.

6. Aéronef (10) comportant un assemblage (100) selon l'une des revendications précédentes.
